# EUROPEAN PATENT APPLICATION

(11) **EP 1 775 457 A1**
(43) Date of publication of application: **18.04.2007**
(21) Application number: 05758249.6
(22) Date of filing: 05.07.2005
(51) Int. Cl.: F02M 37/00, F02M 59/44

(54) **LIQUEFIED GAS FUEL SUPPLY DEVICE OF DIESEL ENGINE**

(30) Priority: 06.07.2004 JP 2004198827
(71) Applicant: Bosch Corporation, Shibuya-ku Tokyo 150-8360 (JP)
(72) Inventor: NOZAKI, Shinya, BOSCH CORPORATION, Higashi-Matsuyama-shi, Saitama, 355-8603 (JP); NODA, Toshifumi, BOSCH CORPORATION, Higashi-Matsuyama-shi, Saitama, 355-8603 (JP); USHIYAMA, Daijo, BOSCH CORPORATION, Higashi-Matsuyama-shi, Saitama, 355-8603 (JP); ISHIKAWA, Teruaki, BOSCH CORPORATION, Higashi-Matsuyama-shi, Saitama, 355-8603 (JP); HAYASAKA, Yukihiro, BOSCH CORPORATION, Higashi-Matsuyama-shi, Saitama, 355-8603 (JP)
(74) Representative: Grünecker, Kinkeldey, Stockmair & Schwanhäusser Anwaltssozietät
(86) International application number: PCT/JP2005/012366
(87) International publication number: WO 2006/004101

(57) **Abstract**

In a diesel engine system of a liquefied gas fuel, the present invention aims at the prevention of storing of the liquefied gas fuel in a cam chamber even when a diesel engine repeats stopping and operation thereof without returning the liquefied gas fuel in a fuel gallery of a fuel pressurizing device such as a supply pump or an injection pump to a fuel tank. An electrically-operated compressor 16e is subjected to an ON/OFF control by a cam chamber pressure regulating part 20. In the inside of a cam chamber 12, a cam chamber pressure sensor 121 which detects a pressure in the inside of the cam chamber 12 is arranged. A cam chamber pressure regulating part 20 performs an OFF control of the electrically-operated compressor 16e when a detected pressure of the cam chamber pressure sensor 121 is a predetermined value or less, and performs an ON control of the electrically-operated compressor 16e so as to reduce the pressure in the inside of the cam chamber 12 to the predetermined pressure or less at a point of time that the detected pressure of the cam chamber pressure sensor 121 exceeds the predetermined pressure thus reducing the pressure in the inside of the cam chamber 12 by suction.

## Description

### Technical Field

The present invention relates to a liquefied gas fuel supply device of a diesel engine which uses a liquefied gas such as DME (dimethyl ether), an LP gas to which a cetane number improver is added (hereinafter, referred to as a high cetane number LP gas) or the like as fuel.

### Background Art

As countermeasures to cope with the air pollution caused by diesel engines, diesel engines which use clean-burning DME or a high cetane number LP gas in place of light oil have been attracting attentions. These fuels are liquefied gas fuel different from light oil which is used conventionally. That is, DME or the like has a lower boiling point compared to light oil and hence, while light oil exists in a liquid state at an atmospheric pressure and at room temperature, DME or the like has properties that the DME or the like exists in a gaseous form also exhibits low viscosity at a room temperature.

In a liquefied gas fuel supply device of a diesel engine, a fuel pressurizing device such as a supply pump or an injection pump which delivers fuel to a fuel injection nozzle under pressure, usually, includes a fuel gallery to which a liquefied gas fuel is delivered from a fuel tank, a cam chamber which is partitioned from the fuel gallery, a cam mechanism which is arranged in the inside of the cam chamber and is rotated due to rotation of the diesel engine, and a pump element which is arranged astride the fuel gallery and the cam chamber and is driven by the cam mechanism so as to deliver liquefied gas fuel in the inside of the fuel gallery to the fuel injection nozzle of the diesel engine.

In the fuel pressurizing device having such a structure, because of the structure that the pump element is arranged astride the fuel gallery and the cam chamber in the inside of the fuel pressurizing device and the above-mentioned properties of the liquefied gas fuel such as the DME (being in a gaseous form and exhibiting low viscosity at a room temperature), there exists a drawback that a trace amount of liquefied gas fuel is leaked into the cam chamber from a plunger of the pump element. This drawback is not generated in a fuel supply device of a diesel engine which uses light oil as fuel. Further, when the liquefied gas fuel leaked into the cam chamber is stored in the inside of the cam chamber and the stored liquefied gas fuel exceeds a predetermined amount, due to the leaked liquefied gas fuel, the lubrication performance of lubricant in the inside of the cam chamber is deteriorated thus giving rise to a possibility that an operation of the fuel pressurizing device is impeded.

As a method for overcoming such a drawback, there has been known a method in which lubricant is separated from a vaporized liquefied gas fuel which is filled in a gaseous portion in the inside of the cam chamber using an oil separator, and the separated gaseous liquefied gas fuel is sucked by a cam drive compressor which is operated using the cam mechanism driven due to the rotation of the diesel engine as a driving power source and is returned to the fuel tank. According to the method, the vaporization of the liquid liquefied gas fuel which is leaked into the inside of the cam chamber is accelerated and hence, it is possible to reduce an amount of the liquefied gas fuel which is mixed into lubricant in a liquid form. Simultaneously, the vaporization of the liquid liquefied gas fuel in a liquid form which is mixed into the lubricant is accelerated and hence, it is possible to shorten a time necessary for separating the liquid liquefied gas fuel in a liquid form from the lubricant. Accordingly, it is possible to reduce the lowering of the lubrication performance of lubricant attributed to the mixing of the liquid liquefied gas fuel into the lubricant.

As a specific example of the related art, for example, there has been known a technique in which a lubricant is separated from vaporized liquefied gas fuel which is filled in a gaseous portion in the inside of the cam chamber using an oil separator, and the vaporized liquefied gas fuel separated by the oil separator is sucked and is returned to a fuel tank by a cam drive compressor which is operated using a cam mechanism as a drive power source (for example, see patent document 1).

A large-sized truck, a large-sized bus or the like on which a conventional diesel engine which uses light oil as fuel is mounted, in general, mounts a so-called idling stop control device which stops a diesel engine at the time of temporary stopping by a red light or the like. This provision is adopted to overcome an atmosphere contamination problem attributed to exhaust gas exhausted during idling of the diesel engine, a noise problem attributed to an engine sound during idling or the like. The control device is configured such that when predetermined idling stopping conditions are satisfied when a vehicle is stopped, the diesel engine is stopped and the diesel engine is restarted at the time of starting the driving of the vehicle. Accordingly, it is possible to reduce the exhaust gas and noises during the temporary stopping such as a red light (see patent document 2, for example).

Patent document 1: JP-A-2003-262167
Patent document 2: JP-A-2000-179389

### Disclosure of the Invention

### Problems that the Invention is to Solve

When the diesel engine is stopped by idling stop or the like, the fuel pressurizing device is also stopped, that is, the cam mechanism of the cam chamber of the fuel pressurizing device is also stopped and hence, the cam drive compressor which is operated using the cam mechanism as the drive power source is also stopped. When the cam drive compressor is stopped, liquefied gas fuel which is leaked into the inside of the cam chamber is sucked and is not fed to the fuel tank and hence, the liquefied gas fuel which is leaked into the cam chamber is stored in the inside of the cam chamber. Leaking of the liquefied gas fuel into the cam chamber from the fuel gallery is prevented, when the diesel engine is stopped over a long period for parking or stopping a vehicle, by executing an operation control in which the delivery of fuel to a fuel pressurizing device from a fuel tank is stopped and the liquefied gas fuel in a fuel gallery of the fuel pressurizing device is sucked by a sucking means such as an aspirator.

However, for example, when the diesel engine is restarted to make a vehicle travel immediately after the vehicle is stopped for a short time such as waiting of change of a traffic light at an intersection, that is, at the time of the above-mentioned idling stop, a following problem arises when the above-mentioned control which is operated at the time of parking and stopping for a long time is performed. That is, when the operational control to return the liquefied gas fuel in the inside of the fuel gallery of the fuel pressurizing device into the fuel tank is performed at the time of stopping, in restarting the diesel engine, a preparation time for filling the liquefied gas fuel into the fuel gallery from the fuel tank becomes necessary whereby there arises a drawback that vehicle cannot start traveling readily at desired timing.

Accordingly, during the idling stop, it is necessary to maintain a state in which diesel engine is stopped while preventing the liquefied gas fuel in the fuel gallery of the fuel pressurizing device from returning to the fuel tank. In this case, the cam mechanism is also stopped and hence, it is impossible to make the liquefied gas fuel which is leaked into the cam chamber from the fuel gallery return to the fuel tank. However, when the diesel engine is restarted from the idling stop state, the cam mechanism also assumes a driving state. By continuing this driving state, the liquefied gas fuel which is leaked into the cam chamber is returned into the fuel tank gradually by the cam driving compressor whereby the increase of the liquefied gas fuel leaked into and stored in the inside of the cam chamber can be prevented.

However, when the idling stop is frequently repeated, the stopping and the traveling are repeated without sufficiently returning the liquefied gas fuel which is leaked into the cam chamber during stopping to the fuel tank using the cam driving compressor during traveling of the vehicle. As a result, the liquefied gas fuel is gradually stored in the inside of the cam chamber and, as mentioned previously, due to the leaked liquefied gas fuel, the lubrication performance of the cam chamber is lowered thus giving rise to a possibility that an operation of the fuel pressurizing device is hampered.

The invention has been made in view of such circumstances and it is an object of the invention, in a diesel engine system which uses a liquefied gas such as DME or the like as fuel, to prevent the storing of liquefied gas fuel into a cam chamber even when a diesel engine frequently repeats stopping and running without returning liquefied gas fuel in a fuel gallery of the fuel pressurizing device such as a supply pump or an injection pump or the like to the fuel tank.

### Means for Solving the Problems

To overcome the above-mentioned drawback, a first aspect of the invention is directed to a fuel supply device of a diesel engine which includes a fuel pressurizing device having a fuel gallery into which liquefied gas fuel is supplied, a cam chamber which is partitioned from the fuel gallery, a cam mechanism which is arranged in the inside of the cam chamber and is driven by the rotation of the diesel engine, and a pump element which is arranged astride the fuel gallery and the cam chamber and is driven by the cam mechanism to deliver under pressure the liquefied gas fuel in the fuel gallery into a fuel injection nozzle of the diesel engine, a separation means which separates the liquefied gas fuel mixed into lubricant in the inside of the cam chamber from the lubricant, a cam chamber pressure regulating means which reduces a pressure in the inside of the cam chamber of the fuel pressurizing device by suction by way of the separation means irrespective of an operational state of the diesel engine, a cam chamber pressure detection means which detects a pressure in the inside of the cam chamber, and a cam chamber pressure regulating means which controls the cam chamber pressure regulating means such that a pressure in the inside of the cam chamber is reduced to a predetermined pressure or less when a detected pressure of the cam chamber pressure detection means exceeds a predetermined pressure.

A fuel pressurizing device such as a supply pump, an injection pump or the like which is used in a fuel supply device of a diesel engine in general includes a cam chamber in which a cam mechanism driven by the rotation of the diesel engine is arranged, a fuel gallery which allows the supply of liquefied gas fuel therein under pressure from the fuel tank and is partitioned from the cam chamber, and a pump element which is driven by the cam mechanism and delivers the liquefied gas fuel in the fuel gallery into a fuel injection nozzle of the diesel engine under pressure. Further, the pump element is arranged astride the fuel gallery and the cam chamber which are partitioned from each other.

Further, the liquefied gas fuel such as DME or high cetane number LP gas has a property to become a gas at normal temperature and hence, when a supply pressure at the time of supplying fuel into the fuel pressuring device from the fuel tank is low, the liquefied gas fuel is vaporized. Accordingly, to supply the liquefied gas fuel from the fuel tank to the fuel pressuring device in a liquid state, it is necessary to increase the fuel delivery pressure necessary for delivering the fuel to the fuel pressuring device compared to a case that light oil is used as fuel.

The liquefied gas fuel such as DME or high cetane number LP gas exhibits low viscosity compared to light oil and hence, the fuel in the fuel gallery is liable to be easily leaked into the cam chamber from a gap defined between a plunger barrel of the pump element and a plunger. Further, since the fuel supply pressure to the fuel pressurizing device is increased, the leaking of the fuel in the fuel gallery into the cam chamber from the gap is further accelerated.

When the liquefied gas fuel is leaked into the inside of the cam chamber from the plunger of the pump element, due to the pressure of the vaporized liquefied gas fuel, the pressure in the inside of the cam chamber is elevated. The pressure is increased corresponding to a stored amount of the liquefied gas fuel leaked into the cam chamber. Accordingly, it is possible to specify an amount of the liquefied gas fuel stored in the inside of the cam chamber by detecting the pressure in the inside of the cam chamber.

Then, the pressure in the inside of the cam chamber is detected and the cam chamber pressure regulating means is controlled to reduce the pressure in the inside of the cam chamber to a predetermined pressure or less at a point of time that the pressure in the inside of the cam chamber exceeds the predetermined pressure. By reducing the pressure in the inside of the cam chamber of the fuel pressurizing device by suction by way of the separation means using the cam chamber pressure regulating means, the vaporization of the liquefied gas fuel leaked into the cam chamber is accelerated. Further, since the vaporized liquefied gas fuel in the inside of the cam chamber is sucked to the outside of the cam chamber, it is possible to prevent a predetermined amount or more of liquefied gas fuel from being stored in the inside of the cam chamber.

That is, the cam chamber pressure regulating means is constituted such that the pressure in the inside of the cam chamber of the fuel pressurizing device can be reduced by suction irrespective of an operational state of the diesel engine and hence, it is always possible to set the pressure in the inside of the cam chamber to a predetermined pressure or less. That is, it is possible to prevent a predetermined amount or more of the liquefied gas fuel from being stored in the inside of the cam chamber irrespective of an operational state of the diesel engine.

In this manner, according to a first aspect of the invention, it is possible to obtain an advantageous effect that even when the stopping and the operation of the diesel engine are frequently repeated without returning the liquefied gas fuel in the fuel gallery of the fuel pressurizing device to the fuel tank, it is possible to prevent the liquefied gas fuel from being stored in the inside of the cam chamber.

The second aspect of the invention is directed to the fuel supply device of a diesel engine which is, in the first aspect of the invention, characterized in that the cam chamber pressure regulating means includes an electrically-operated compressor which is capable of reducing the pressure in the inside of the cam chamber by suction and is configured to be capable of regulating the pressure in the inside of the cam chamber by controlling the electrically-operated compressor.
In this manner, by providing the electrically-operated motor which is capable of reducing the pressure in the inside of the cam chamber by suction, it is possible to reduce the pressure in the inside of the cam chamber of the fuel pressurizing device by suction irrespective of the operational state of the diesel engine.

The third aspect of the invention is directed to the liquefied gas fuel supply device of a diesel engine which is, in the first aspect of the invention, characterized in that the cam chamber pressure regulating means includes a pressure reducing tank, a means which reduces the pressure in the inside of the pressure reducing tank to a predetermined pressure or less and holds the reduced pressure, and a cam chamber pressure regulating valve which is capable of opening or closing the communication between the pressure reducing tank and the cam chamber, wherein the pressure in the inside of the cam chamber is regulatable by performing an open/close control of the cam chamber pressure regulating valve.
In this manner, by reducing the pressure in the inside of the pressure reducing tank to the predetermined pressure or less and by holding the reduced pressure with the provision of the pressure reducing tank and by performing the open control of the cam chamber pressure regulating valve which is capable of opening or closing the communication between the pressure reducing tank and the cam chamber of the fuel pressurizing device, it is possible to reduce the pressure in the inside of the cam chamber of the fuel pressurizing device by suction due to a negative pressure in the pressure reducing tank irrespective of an operational state of the diesel engine.

The fourth aspect of the invention is directed to the liquefied gas fuel supply device of a diesel engine which is, in the third aspect of the invention, characterized in that the fuel supply device includes a cam driving compressor which uses the cam mechanism in the inside of the cam chamber as a driving power source and delivers the liquefied gas fuel which is separated by the separation means to the fuel tank by pressurizing, wherein the pressure reducing tank is connected to a suction port of the cam driving compressor by way of a check valve and hence, the pressure in the inside of the cam chamber is reduced into a negative pressure by suction due to an operation of the cam driving compressor, and the pressure in the inside of the cam chamber is regulatable by an open/close control of the cam chamber pressure regulating valve in a negative pressure state.

Since the pressure reducing tank is connected to the suction port of the cam driving compressor, the inside of the pressure reducing chamber assumes a negative pressure state due to a suction force of the cam driving compressor during a period in which the cam driving compressor is operated, that is, during the operation of the diesel engine. Then, the inside of the pressure reducing tank is also held in the above-mentioned negative pressure state even after stopping the diesel engine.

That is, the power of the cam driving compressor which is operated only during the diesel engine operation is preliminarily converted into the negative pressure in the pressure reducing tank and the negative pressure is held (being held in a standby state) and, after stopping the diesel engine, the pressure control of the cam chamber is performed by making use of a suction force based on the negative pressure in the pressure reducing tank after stopping the diesel engine. Accordingly, due to the combination of the cam driving compressor whose driving is limited to a period in which the diesel engine is operated and the pressure reducing tank, even when the diesel engine is stopped, it is possible to allow the fuel supply device to perform the function by way of the negative pressure in the inside of the pressure reducing tank.

The fifth aspect of the invention is directed to the liquefied gas fuel supply device of a diesel engine which is, in the second aspect of the invention, characterized in that the cam chamber pressure regulating means includes a pressure switch which uses the pressure of the cam chamber as the driving power source.
In this manner, since the cam chamber pressure regulating means is constituted of the pressure switch which uses the pressure in the inside of the cam chamber as the driving power source, the cam chamber pressure regulating means can be simplified.

The sixth aspect of the invention is directed to a liquefied gas fuel supply device which includes a fuel pressurizing device which delivers under pressure the liquefied gas fuel which is fed from a fuel tank to a fuel injection nozzle of a diesel engine, an overflow fuel flow passage for returning the liquefied gas fuel which overflows from a fuel gallery of the fuel pressurizing device to the fuel tank, a residual fuel retrieving means which sucks the liquefied gas fuel remaining in the fuel gallery and the overflow fuel flow passage by a compressor and delivers the sucked liquefied gas fuel to the fuel tank after stopping the diesel engine, and a cam chamber suction means which sucks the liquefied gas fuel leaked from a cam chamber of the fuel pressurizing device by a compressor, wherein the compressor is a hydraulic driving compressor which is arranged on a branch flow passage for liquefied gas fuel which is branched from a delivery passage for liquefied gas fuel to the fuel pressurizing device from a fuel delivery means which delivers the liquefied gas fuel to the fuel pressurizing device from the fuel tank to the fuel pressurizing device and returns to the fuel tank, and is operated in response to a liquid pressure of the liquefied gas fuel which flows into a branch flow passage, the residual fuel retrieving means includes a suction passage open/close valve which opens or closes a suction passage from the fuel gallery and the overflow fuel flow passage to the hydraulic driving compressor, a branch flow passage open/close valve which is capable of opening or closing the branch flow passage, and a residual fuel retrieving control device which controls an operation of the hydraulic driving compressor in a state that the suction passage open/close valve is closed during the operation of the diesel engine and controls the operation of the hydraulic driving compressor in a state that the suction passage open/close valve is opened after stopping the operation of the diesel engine, and the residual fuel retrieving control device controls the operation of the hydraulic driving compressor by performing an open/close control of the branch flow passage open/close valve.

That is, these aspects of the invention are constituted as follows.
The hydraulic driving compressor for sucking the liquefied gas fuel which remains in the fuel gallery and the overflow fuel flow passage after stopping the diesel engine is, during the operation of the diesel engine, also utilized a means for sucking the liquefied gas fuel leaked to the cam chamber of the fuel pressurizing device. The inside of the cam chamber of the fuel pressurizing device is configured to be capable of sucking the liquefied gas fuel with the use of the hydraulic driving compressor and, at the same time, the suction passage open/close valve for opening or closing the suction passage from the fuel gallery and the overflow fuel flow passage to the hydraulic driving compressor is provided.
During a period in which the diesel engine is operated, the hydraulic driving compressor is operated in a state that the suction passage open/close valve is closed so as to suck the liquefied gas fuel leaked into the cam chamber of the fuel pressurizing device and to deliver the liquefied gas fuel to the fuel tank. On the other hand, after stopping the diesel engine, the hydraulic driving compressor is operated in a state that the suction passage open/close valve is opened so as to suck the liquefied gas fuel remaining in the fuel gallery and the overflow fuel flow passage of the fuel pressurizing device and to deliver the liquefied gas fuel to the fuel tank.

In the diesel engine system which uses the liquefied gas such as DME or the like as the fuel, even when the diesel engine frequently repeats the stopping and the operation thereof without returning the liquefied gas fuel in the fuel gallery of the fuel pressurizing device such as the supply pump, the injection pump or the like to the fuel tank, it is possible to prevent the liquefied gas fuel from being stored in the inside of the cam chamber.

### Best Mode for Carrying out the Invention

Hereinafter, embodiments of the invention are explained in conjunction with drawings.
First of all, the schematic constitution of a DME fuel supply device is explained as "a liquefied gas fuel supply device of a diesel engine" according to the invention. As the liquefied gas fuel, DME or a high-cetane-number LP gas (an LP gas to which a cetane number improver is added) having a cetane value of approximately 40 to 55, desirably of 50 or more may be used as a typical example.

In the embodiments explained hereinafter, a case in which DME is used as the liquefied gas fuel is described. Here, when the high-cetane-number LP gas is used, as the cetane number improver, known ester nitrate, amyl nitrite, organic peroxide or the like is used. As a specific cetane number improver, DTBP (Di-tertiary butyl peroxide) or 2HEN(2-Ethylhexylnitrate) may be used. Further, the LP gas exhibits the low lubricity compared to the light oil and hence, it is desirable to add known alkyl ester as a lubricity improver.

### Embodiment 1

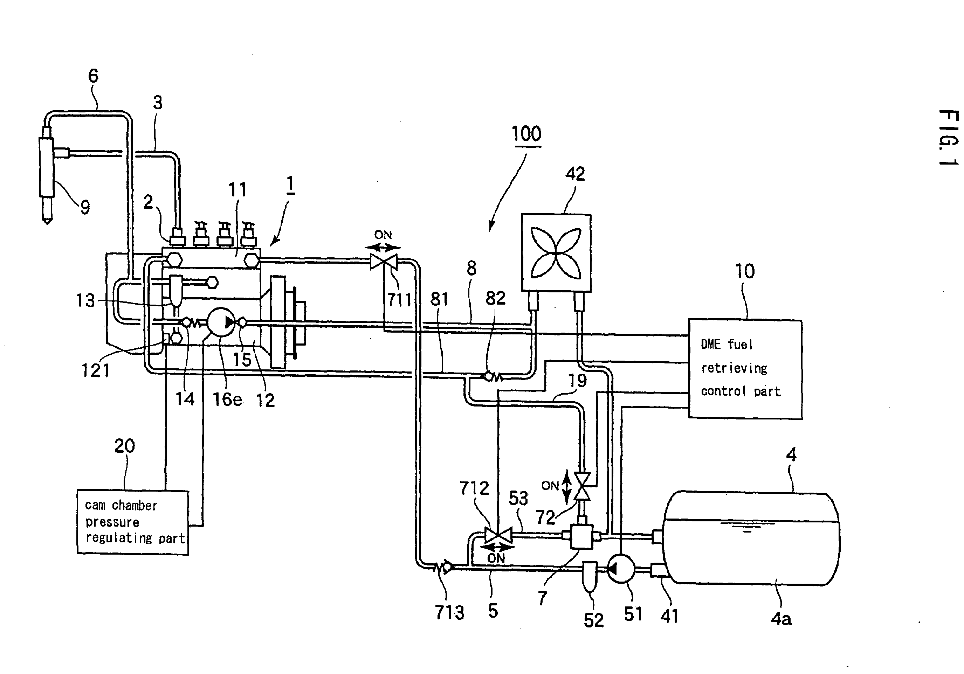

Fig. 1 is a schematic constitutional view showing a first embodiment of a DME fuel supply device which constitutes "the fuel supply device of a diesel engine" according to the invention.

The DME fuel supply device 100 which supplies DME fuel as "liquefied gas fuel" into the diesel engine includes an injection pump 1 which constitutes "fuel pressurizing device" and a fuel tank 4. The injection pump 1 includes injection pump elements 2 which are provided in number equal to cylinders which the diesel engine includes. A delivery pump 51 which constitutes "fuel delivery means" pressurizes DME fuel stored in the fuel tank 4 and delivers the DME fuel to a delivery pipe 5 which constitutes "a delivery path" leading to the injection pump 1 therefrom.

A DME fuel delivery port 41 of the fuel tank 4 is provided below a liquid surface of a liquid phase 4a in the inside of the fuel tank 4, and the delivery pump 51 is arranged in the vicinity of the DME fuel delivery port 41 of the fuel tank 4. The DME fuel which is fed to the delivery pipe 5 is filtered with a filter 52, and is fed to the injection pump 1 by way of a delivery pipe open/close solenoid valve 711 which constitutes "a delivery passage open/close valve" which opens or closes a check valve 713 and the delivery pipe 5.

The delivery pipe open/close solenoid valve 711 is, in a state that the delivery pipe open/close solenoid valve 711 assumes an open state with an ON signal in a fuel injection state (in a state that the diesel engine is operated), communicated with the delivery pipe 5. The check valve 713 prevents the DME fuel from reversely flowing into the fuel tank 4 side from the injection pump 1 side.

In the injection pump 1, a fuel gallery 11 into which the DME fuel delivered under pressure from the fuel tank 4 by the delivery pump 51 is filled through the delivery pipe 5, and a cam chamber 12 in which a cam mechanism driven by the rotation of the diesel engine is arranged are formed. The cam chamber 12 is partitioned from the fuel gallery 11, the injection pump element 2 is arranged astride the fuel gallery 11 and the cam chamber 12 which are partitioned from each other, and an injection pump element 2 is driven by a cam mechanism arranged in the inside of the cam chamber 12.

The DME fuel in the fuel gallery 11 is fed under pressure to fuel injection nozzles 9 which are provided to respective cylinders (not shown in the drawing) of the diesel engine at predetermined timing and only by a predetermined amount by way of injection pipes 3 from the respective injection pump elements 2.

On an overflow fuel pipe 81 which constitutes "an overflow fuel flow passage" for returning the DME fuel overflown from the fuel gallery 11 to the fuel tank 4, an overflow valve 82 is mounted, wherein the overflow valve 82 holds a pressure of the DME fuel in the fuel gallery 11 at a predetermined pressure and, at the same time, defines the flow direction of the DME fuel only in the direction that the DME fuel overflown from the fuel gallery 11 returns to the fuel tank 4.

The DME fuel overflown from the fuel gallery 11 of the injection pump 1 is returned to the fuel tank 4 through the overflow valve 82 and a cooler 42 via the overflow fuel pipe 81. The DME fuel overflown from the respective fuel injection nozzles 9 is returned to the fuel tank 4 through an overflow pipe 8 and the cooler 42 by an electrically-operated compressor 16e via a nozzle return pipe 6.

Further, the DME fuel supply device 100 includes "a residual fuel retrieving means" which retrieves the DME fuel remaining in the fuel gallery 11 and the overflow fuel pipe 81 of the injection pump 1 and the injection pipe 3 into the fuel tank 4 at the time of stopping the diesel engine.

"The residual fuel retrieving means" includes a fuel circulating flow pipe 53 which constitutes "a circulating flow passage" in which the DME fuel fed from the delivery pump 51 is delivered, a fuel circulating pipe open/close solenoid valve 712 which constitutes "a circulating flow passage open/close valve" which opens or closes the fuel circulating flow pipe 53, an aspirator 7 in which a suction force is generated by circulating the DME fuel in the circulating flow pipe 53, a delivery pipe open/close solenoid valve 711, a purge pipe 19 which allows a suction port of the aspirator 7 and the overflow fuel pipe 81 to be communicated with each other and constitutes "a vaporization passage" for vaporizing the DME fuel remaining in the fuel gallery 11, the overflow fuel pipe 81 and injection pipe 3 due to the suction force of the aspirator 7, a suction port open/close solenoid valve 72 which constitutes "a vaporization passage open/close valve" which opens or closes the communication with the purge pipe 19, and a DME fuel retrieving control part 10 which constitutes "a residual fuel retrieving control device".

The DME fuel retrieving control part 10 detects an operation/stopping state (an injection/non-injection state of the DME fuel supply device 100) of the diesel engine and executes open/close controls (ON/OFF controls) of the delivery pump 51, the delivery pipe open/close solenoid valve 711, the fuel circulating pipe open/close solenoid valve 712, and the suction port open/close solenoid valve 72 corresponding to the respective states.
The DME fuel retrieving control part 10, at the time of stopping the diesel engine, executes a control for retrieving the DME fuel remaining in the fuel gallery 11, the injection pipe 3 and the overflow fuel pipe 81.

The cam chamber 12 of the injection pump 1 constitutes a dedicated lubricating system which is separated from a lubricating system of the diesel engine, wherein an oil separator 13 which constitutes "a separation means" separates the lubricant from a gaseous state portion in the inside of the cam chamber 12 in which the DME fuel leaked from the cam chamber 12 in the injection pump 1 is mixed and returns the lubricant to the cam chamber 12.
The DME fuel in a gaseous state from which the lubricant is separated by the oil separator 13 is fed to an electrically-operated compressor 16e which constitutes "a cam chamber pressure regulating means" through a check valve 14 which prevents a pressure in the inside of the cam chamber 12 from becoming an atmospheric pressure or less. Then, the DME fuel is, after being pressurized by the electrically-operated compressor 16e, returned to the fuel tank 4 through the check valve 15 and the cooler 42. The check valve 15 is provided for preventing the DME fuel from reversely flowing into the cam chamber 12 from the fuel tank 4 at the time of stopping the diesel engine.

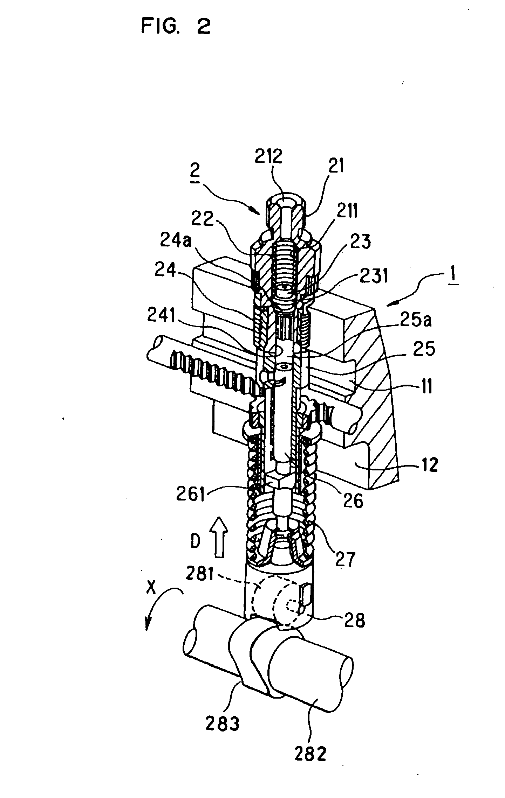

Fig. 2 is a perspective view of an essential part showing the vicinity of the injection pump element 2 of the injection pump 1.
As mentioned previously, in the inside of the injection pump 1, the fuel gallery 11 and the cam chamber 12 are formed in a state that the chambers are partitioned from each other. The injection pump element 2 is arranged astride the fuel gallery 11 and the cam chamber 12 as shown in the drawing. A delivery valve holder 21 of the injection pump element 2 is configured to have a delivery valve insertion hole 211 and is fixed to a base body of the injection pump 1. The injection pipe 3 is connected to a fuel liquid delivery port 212 which is communicated with the delivery valve insertion hole 211.

A delivery valve 23 is inserted into the delivery valve insertion hole 211 in a reciprocating manner, wherein the delivery valve 23 is biased by a delivery spring 22 such that a valve portion 231 is brought into contact with a valve seat portion 24a of a delivery valve seat 24 which is integrally formed with a delivery valve holder 21. A plunger barrel 25 is integrally formed with the delivery valve seat 24 and includes a compression chamber 25a which is communicated with the delivery valve seat 24.
In the compression chamber 25a, a plunger 26 is inserted into an inner periphery 241 of the delivery valve seat 24 in a reciprocating manner, and one end side of the compression chamber 25a faces the delivery valve 23. The plunger 26 is biased to a cam 283 side by a plunger spring 27 by way of a tappet 28.

In the inside of the cam chamber 12, a cam 283 of a cam shaft 282 which constitutes "a cam mechanism" is arranged. The plunger 26 is connected to a drive shaft of the diesel engine. Then, due to the cam 283 of the cam shaft 282 which is rotated in the rotating direction indicated by symbol X by a driving force of the diesel engine, the plunger 26 is pushed up toward the delivery valve 23 side (the direction indicated by an arrow of symbol D) by way of the tappet 28. With respect to the tappet 28, a tappet roller 281 is pivotally supported such that the tappet roller 281 is rotated as a follower, wherein an outer peripheral surface of the cam 283 and a peripheral surface of the tappet roller 281 are brought into contact with each other.

As described above, in the DME fuel supply device 100 of the diesel engine which constitutes the constitution explained in conjunction with Fig. 1 and Fig. 2, the injection pump 1 is configured such that the injection pump element 2 is arranged astride the fuel gallery 11 and the cam chamber 12 as shown in Fig. 2 and is driven by the cam mechanism arranged in the inside of the cam chamber 12.
The DME fuel which constitutes "liquefied gas fuel" has the property to become a gaseous body at a room temperature and exhibits the low viscosity and hence, the DME fuel in the fuel gallery 11 is gradually leaked to the cam chamber 12 through the injection pump element 2. Further, when a fixed amount or more of the DME fuel is stored in the inside of the cam chamber 12, due to the DME fuel leaked into the cam chamber 12, there exists a possibility that lubricity of the lubricant in the inside of the cam chamber 12 is lowered thus lowering a function of the cam mechanism.

When the DME fuel in the fuel gallery 11 is leaked into the cam chamber 12, due to the pressure of the DME fuel which is leaked into the cam chamber 12 and is vaporized, the pressure in the inside of the cam chamber 12 is elevated. Accordingly, the pressure in the inside of the cam chamber 12 is elevated corresponding to a stored amount of the DME fuel leaked into the cam chamber 12. That is, by detecting the pressure of the cam chamber 12, the amount of the DME fuel which is leaked into and stored in the inside of the cam chamber 12 is specified.

Further, the electrically-operated compressor 16e is configured to be operated using electric power of a battery of a diesel-engine loaded vehicle. Accordingly, it is possible to reduce the pressure in the inside of the cam chamber 12 of the injection pump 1 via an oil separator 13 by suction irrespective of an operational state of the diesel engine.

The electrically-operated compressor 16e is subjected to an ON/OFF control by a cam chamber pressure regulating part 20 which constitutes "a cam chamber pressure regulating means". In the inside of the cam chamber 12, a cam chamber pressure sensor 121 which constitutes "a cam chamber pressure detection means" which detects the pressure in the inside of the cam chamber 12 is arranged. The cam chamber pressure regulating part 20 performs the OFF control of the electrically-operated compressor 16e when a detected pressure of the cam chamber pressure sensor 121 becomes a predetermined value or less, and performs the ON control of the electrically-operated compressor 16e so as to reduce the pressure in the inside of the cam chamber 12 at a predetermined pressure or less by suction at a point of time that the detected pressure of the cam chamber pressure sensor 121 exceeds the predetermined value.

By reducing the pressure in the inside of the cam chamber 12 of the injection pump 1 by suction using the electrically-operated compressor 16e by way of the oil separator 13, the vaporization of the DME fuel leaked into the cam chamber 12 is accelerated and the vaporized DME fuel in the inside of the cam chamber 12 is returned to the fuel tank 4 by way of the overflow pipe 8 and the cooler 42 and hence, a fixed or more amount of DME fuel is not stored in the inside of the cam chamber 12.

Further, the electrically-operated compressor 16e can reduce the pressure in the inside of the cam chamber 12 of the injection pump 1 by suction irrespective of the operational state of the diesel engine and hence, it is possible to perform the reduction of pressure such that the detected pressure by the cam chamber pressure sensor 121 does not exceed the allowable pressure thus always preventing the DME fuel from being stored in the inside of the cam chamber 12 exceeding a fixed amount of the DME fuel.

Here, the allowable pressure is a pressure corresponding to a case in which a amount of the DME fuel which generates a possibility of lowering of the function of the cam mechanism by lowering the lubrication performance of the lubricant in the inside of the cam chamber 12 due to the DME fuel leaked into the cam chamber 12 is leaked and stored in the inside of the cam chamber 12. This allowable pressure is a pressure value which is set based on an experiment or the like.

In this manner, in the diesel engine system which uses the DME as "the liquefied gas fuel", even when the diesel engine frequently repeats the stopping and the operation without returning the DME fuel in the fuel gallery 11 of the fuel injection pump 1 to the fuel tank 4, it is possible to prevent the DME fuel from being stored in the inside of the cam chamber 12.

### Embodiment 2

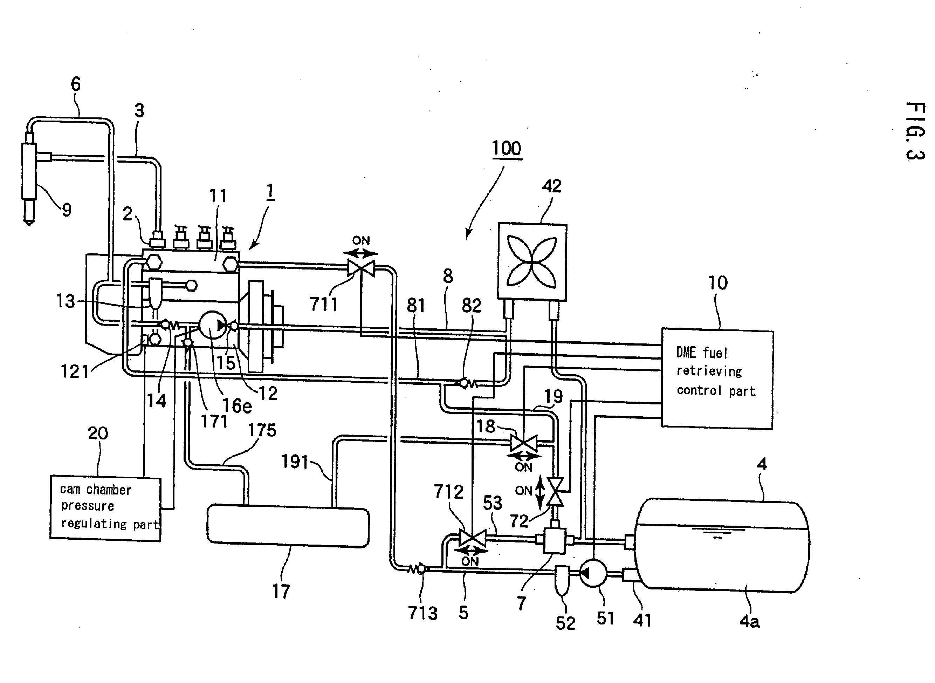

Fig. 3 is a schematic constitutional view showing a second embodiment of the DME fuel supply device 100 which constitutes "the fuel supply device of a diesel engine" according to the invention. Here, parts having the identical constitutions with the parts of the DME fuel supply device 100 described in the embodiment 1 are given same symbols and their explanation is omitted.

The electrically-operated compressor 16e is provided as the part which has a function of "the cam chamber pressure regulating means" in the same manner as "the cam chamber pressure regulating means" described in the above-mentioned first embodiment. Accordingly, the electrically-operated compressor 16e can reduce the pressure in the inside of the cam chamber 12 of the injection pump 1 by suction by way of the oil separator 13 irrespective of the operational state of the diesel engine.

The DME fuel supply device 100 in this embodiment includes a pressure reducing tank 17 of a small capacity than the fuel tank 4 having the hermetically sealed structure. The pressure reducing tank 17 is connected to a suction side of the electrically-operated compressor 16e using a pipe 175 by way of a check valve 171. The pressure reducing tank 17 is sucked by the electrically-operated compressor 16e and hence, the inner pressure of the pressure reducing tank 17 is brought into a negative pressure state, and a low-pressure state is maintained by the check valve 171 even when the electrically-operated compressor 16e is stopped. Further, the pressure reducing tank 17 is communicated with an upstream portion of an overflow valve 82 of an overflow fuel pipe 81 using the suction pipe 191.

A suction pipe 191 is configured to be communicated with the overflow fuel pipe 81 by way of a purge pipe 19. To the suction pipe 191, a suction pipe open/close solenoid valve 18 which is capable of opening or closing the suction pipe 191 is provided. The suction pipe open/close solenoid valve 18 is controlled by a DME fuel retrieving control part 10. The suction pipe open/close solenoid valve 18 is controlled by a DME fuel retrieving control part 10, wherein at the time of stopping the diesel engine, the suction pipe open/close solenoid valve 18 assumes an open state in response to an ON control, and the pressure reducing tank 17 and the overflow fuel pipe 81 are communicated with each other, while at the time of operating the diesel engine, the suction pipe open/close solenoid valve 18 assumes a closed state in response to an OFF control and the communication between the pressure reducing tank 17 and the overflow fuel pipe 81 is interrupted.

### Embodiment 3

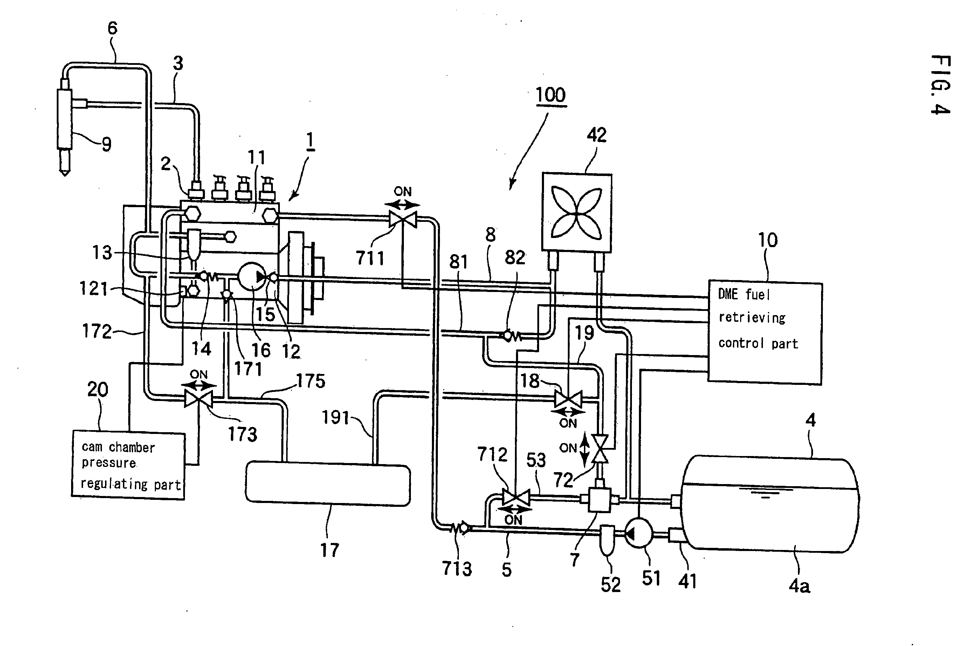

Fig. 4 is a schematic constitutional view showing a third embodiment of the DME fuel supply device 100 which constitutes "the fuel supply device of a diesel engine" according to the invention. Here, parts having the identical constitutions with the parts of the DME fuel supply device 100 described in the embodiment 1 or the embodiment 2 are given same symbols and their explanation is omitted.

The DME fuel supply device 100 in this embodiment includes, in the same manner as the second embodiment, a pressure reducing tank 17 of a small capacity than the fuel tank 4 having the hermetically sealed structure. The pressure reducing tank 17 is sucked by a cam driving compressor 16 in place of the electrically-operated compressor 16e of the second embodiment and hence, the inner pressure of the pressure reducing tank 17 is brought into a negative pressure state. Here, a low-pressure state is held by a check valve 171 even when the cam driving compressor 16 is stopped. The cam driving compressor 16 is operated only when the diesel engine is operated and is stopped when the diesel engine is in a stopped state.

In the DME fuel supply device 100 in this embodiment, the pressure reducing tank 17 which is provided for retrieving the DME fuel remaining in the fuel gallery 11, the injection pipe 3 and the overflow fuel pipe 81 after stopping the diesel engine also functions as "a cam chamber pressure regulating means" for reducing the pressure in the inside of the cam chamber 12 by suction. A pipe 172 which is provided for allowing the cam chamber 12 to be communicated with the pressure reducing tank 17 via the oil separator 13 is arranged in the DME fuel supply device 100, while a cam chamber pressure regulating valve 173 which opens or closes the communication between the cam chamber 12 and the pressure reducing tank 17 and regulates the pressure in the inside of the cam chamber 12 is also arranged in the pipe 172.

The cam chamber pressure regulating part 20 performs the closing control (the OFF control) of the cam chamber pressure regulating valve 173 when a detected pressure of the cam chamber pressure sensor 121 becomes a predetermined value or less, and performs the open control (the ON control) of the cam chamber pressure regulating valve 173 so as to reduce the pressure in the inside of the cam chamber 12 to a predetermined pressure or less by suction at a point of time that the detected pressure of the cam chamber pressure sensor 121 exceeds the predetermined pressure.

By reducing the pressure in the inside of the cam chamber 12 of the injection pump 1 by suction due to the negative pressure in the pressure reducing tank 17 by way of the oil separator 13, the vaporization of the DME fuel leaked into the cam chamber 12 is accelerated and, at the same time, the vaporized DME fuel in the inside of the cam chamber 12 is sucked into the inside of the pressure reducing tank 17 and hence, it is possible to prevent a fixed or more amount of DME fuel from being stored in the inside of the cam chamber 12. The pressure in the pressure reducing tank 17 is reduced by suction using a cam driving compressor 16 during the operation of the diesel engine, and the pressure reducing tank 17 is held in a negative pressure state due to a check valve 171 even when the cam driving compressor 16 is stopped by stopping the diesel engine.

Accordingly, the pressure in the inside of the cam chamber 12 of the injection pump 1 can be reduced by suction irrespective of the operational state of the diesel engine. That is, irrespective of the operational state of the diesel engine, the pressure in the inside of the cam chamber 12 can be reduced to a predetermined pressure or less at a point of time that the detected pressure of the cam chamber pressure sensor 121 exceeds the predetermined pressure and hence, it is possible to always prevent a fixed amount or more of DME fuel from being stored in the inside of the cam chamber 12.

Here, the DME fuel which is sucked into the pressure reducing tank 17 is returned to the fuel tank 4 by suction using the cam driving compressor 16 when the diesel engine is restarted so as to operate the cam driving compressor 16.

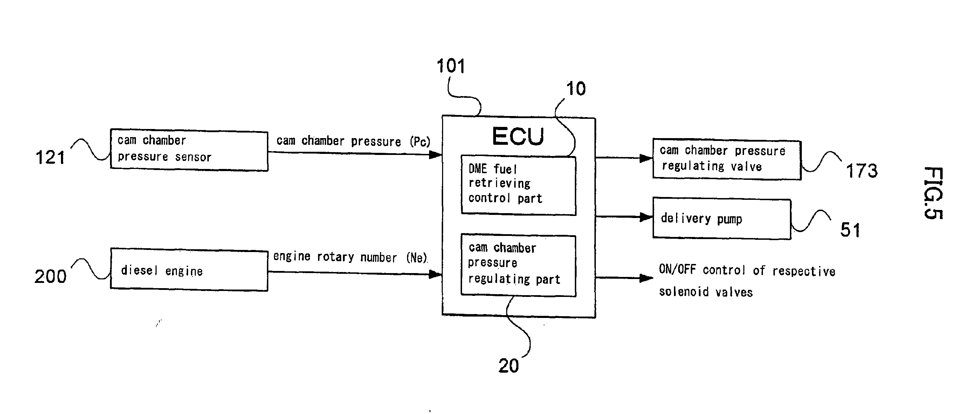

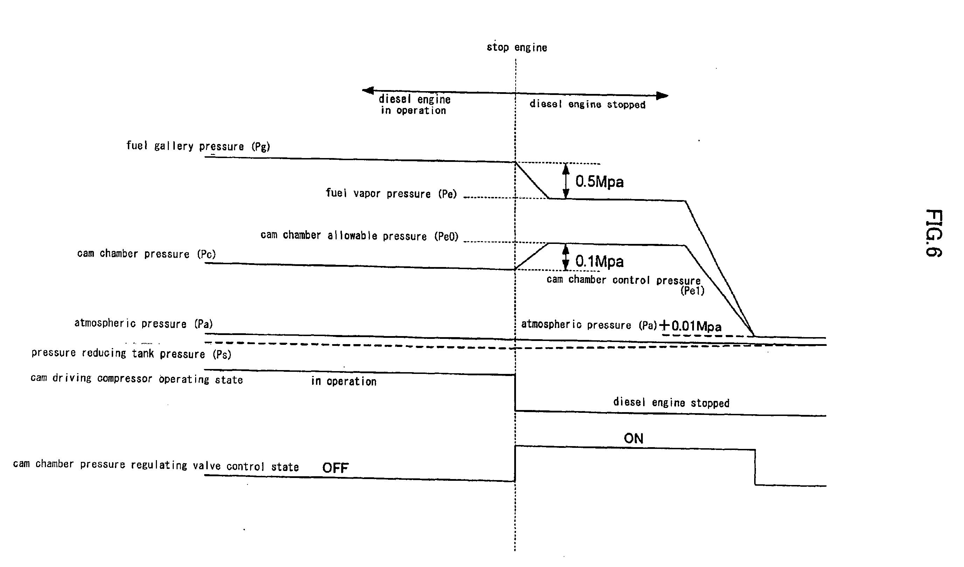

Fig. 5 is a block diagram of the DME fuel supply device 100. Fig. 6 is a timing chart showing pressures in the fuel gallery 11 and the cam chamber 12 in response to the control of the cam chamber pressure regulating valve 173.

An ECU (an electronic control unit) 101 which constitutes a control means including the DME fuel retrieving control part 10 and the cam chamber pressure regulating part 20 is a known vehicle-use control device which executes various controls such as an engine control, a brake control and the like of a diesel engine vehicle on which the diesel engine 200 and the DME fuel supply device 100 are mounted.

In the ECU 101, a cam chamber pressure Pc which the cam chamber pressure sensor 121 outputs and an engine rotational speed Ne of the diesel engine 200 are inputted. The ECU 101 determines an operational state of the diesel engine 200 based on the engine rotational speed Ne of the diesel engine 200, and executes the ON/OFF controls of the cam chamber pressure regulating valve 173, the delivery pump 51 and other respective solenoid valves based on the operational state, the cam chamber pressure Pc and other state information.

During the operation of the diesel engine 200, a pressure in the fuel gallery 11 of the injection pump 1 (a fuel gallery pressure Pg) is maintained at an approximately fixed high pressure (a pressure higher than a fuel vapor pressure Pe by 0.5Mpa) due to the supply of the DME fuel under pressure from the fuel tank 4 by the delivery pump 51. During the period, the cam chamber pressure regulating part 20 maintains a state in which the communication between the cam 12 and the pressure reducing tank 17 is interrupted by closing the cam chamber pressure regulating valve 173.

The cam driving compressor 16 which is driven by the cam mechanism in the inside of the cam chamber 12 of the injection pump 1 continues the operation during the diesel engine 200 is operated and hence, during that period, the pressure in the inside of the cam chamber 12 (the cam chamber pressure Pc) is always reduced by suction using the cam driving compressor 16 via the check valve 14. Accordingly, the pressure in the inside of the cam chamber 12 (the cam chamber pressure Pc) which tends to be elevated in response to a vapor pressure of the DME fuel leaked into the cam chamber 12 from the fuel gallery 11 is maintained at a predetermined pressure (a cam chamber control pressure Pe1) which is restricted by the check valve 14.

When the diesel engine 200 which undergoes the operation is stopped, the supply of the pressurized fuel to the fuel gallery 11 by the delivery pump 51 is stopped, and the retrieving operation of the DME fuel which remains in the fuel gallery 11 is started by "the residual fuel retrieving means" which is controlled by the DME fuel retrieving control part 10. The pressure in the fuel gallery 11 is reduced by suction by "the residual fuel retrieving means" and hence, the DME fuel which remains in the fuel gallery 11 in a liquid state is gradually vaporized and is retrieved into the fuel tank 4.

The fuel gallery pressure Pg continuously holds a state that the fuel gallery pressure Pg is lowered to the approximately fuel vapor pressure Pe during a period in which the DME fuel in a liquid state remains in the fuel gallery 11. During that period, the fuel leaked into the cam chamber 12 from the fuel gallery 11 is increased and hence, the cam chamber pressure Pc tends to be further elevated. Accordingly, the cam chamber pressure regulating part 20 holds a state that the cam chamber pressure regulating valve 173 is opened by performing an ON control of the cam chamber pressure regulating valve 173 such that the cam chamber pressure Pc does not exceed a cam chamber allowable pressure PeO (a cam chamber control pressure Pe1+0.1Mpa). Due to such a control, the communication state between the cam chamber 12 and the pressure reducing tank 17 is held, and the pressure in the inside of the cam chamber 12 is reduced by the pressure reducing tank pressure Ps which is reduced to the atmospheric pressure Pa or less thus suppressing the elevation of the cam chamber pressure Pc.

The DME fuel can be present only in a gaseous form in the fuel gallery 11 when the pressure in the fuel gallery 11 is equal to or less the fuel vapor pressure Pe. Accordingly, when there is no DME fuel remaining in a liquid state in the fuel gallery 11, the fuel gallery pressure Pg starts lowering thereof gradually Further, along with the lowering of the fuel gallery pressure Pg, the DME fuel leaked into the cam chamber 12 from the fuel gallery 11 is reduced and hence, the cam chamber pressure regulating valve 173 continuously holds a valve open state while holding an ON control thus holding a communication state between the cam chamber 12 and the pressure reducing tank 17 whereby the cam chamber pressure Pc is also lowered due to the pressure reducing tank pressure Ps which is reduced to the atmospheric pressure Pa or less. Then, at a point of time that the fuel gallery pressure Pg is lowered to the vicinity of the atmospheric pressure (atmospheric pressure Pa + 0.01MPa), the retrieving operation of the "residual fuel retrieving means" is stopped and, at the same time, at a point of time that the cam chamber pressure Pc is lowered to the vicinity of the atmospheric pressure, the cam chamber pressure regulating valve 173 is subjected to an OFF control thus interrupting the communication between the cam chamber 12 and the pressure reducing tank 17.

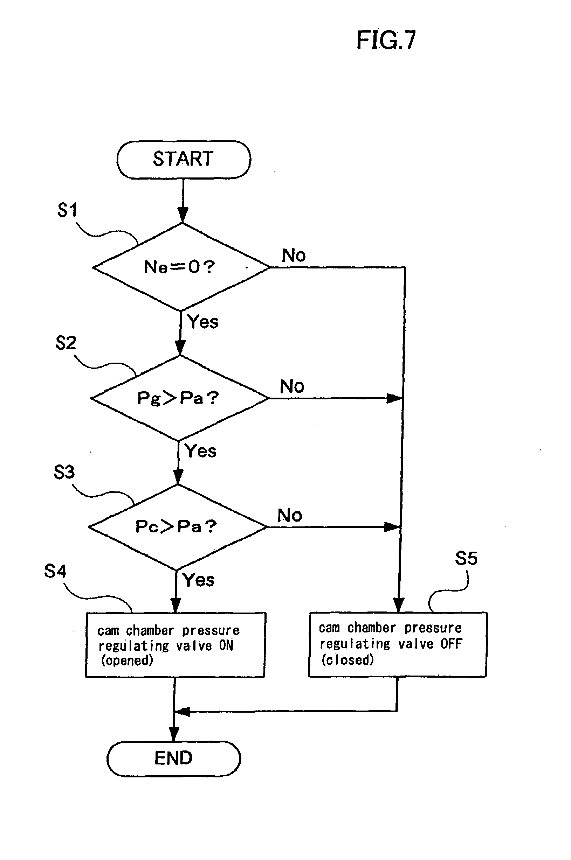

Fig. 7 is a flow chart showing the control steps of the cam chamber pressure regulating valve 173.
First of all, it is determined whether the engine rotational speed Ne is 0 or not (step S1) thus determining whether the diesel engine 200 is operated or stopped. When the engine rotational speed Ne is not 0 (No in step S1), that is, when the diesel engine 200 is operated, the pressure in the inside of the cam chamber 12 (the cam chamber pressure Pc) is always reduced by suction using the cam drive compressor 16 via the check valve 14 and hence, the cam chamber pressure regulating valve 173 is subjected to an OFF control thus holding a state that the communication between the cam chamber 12 and the pressure reducing tank 17 is interrupted (step S5).

On the other hand, when the engine rotational speed Ne is 0 (Yes in step S1), that is, when the diesel engine 200 is stopped, subsequently, it is determined whether the fuel gallery pressure Pg exceeds the atmospheric pressure Pa or not (step S2). When the fuel gallery pressure Pg is not lowered to the atmospheric pressure Pa (the atmospheric pressure Pa + 0.01Mpa) (Yes in step S2), subsequently, it is determined whether the cam chamber pressure Pc exceeds the atmospheric pressure Pa or not (step S3). When the cam chamber pressure Pc is not lowered to the atmospheric pressure Pa (the atmospheric pressure Pa + 0.01Mpa) (Yes in step S3), the cam chamber pressure regulating valve 173 is subjected to an ON control thus holding a state that the cam chamber 12 and the pressure reducing tank 17 are communicated with each other whereby the pressure in the inside of the cam chamber 12 is reduced by suction due to the negative pressure in the pressure reducing tank 17 (step S4).

Then, when the cam chamber pressure Pc is lowered to the atmospheric pressure Pa (atmospheric pressure Pa + 0.01Mpa) (No in step S3), the cam chamber pressure regulating valve 173 is subjected to an OFF control thus holding a state that the communication between the cam chamber 12 and the pressure reducing tank 17 is interrupted (step S5). Further, even when the fuel gallery pressure Pg is lowered to the atmospheric pressure Pa (atmospheric pressure Pa + 0.01Mpa) (No in step S2), it is determined that the DME fuel remaining in the fuel gallery 11 is approximately retrieved and, in this case, it is determined that the cam chamber pressure Pc is also lowered to the atmospheric pressure Pa (atmospheric pressure Pa + 0. 01Mpa) whereby the cam chamber pressure regulating valve 173 is subjected to an OFF control thus holding a state that the communication between the cam chamber 12 and the pressure reducing tank 17 is interrupted (step S5).

### Embodiment 4

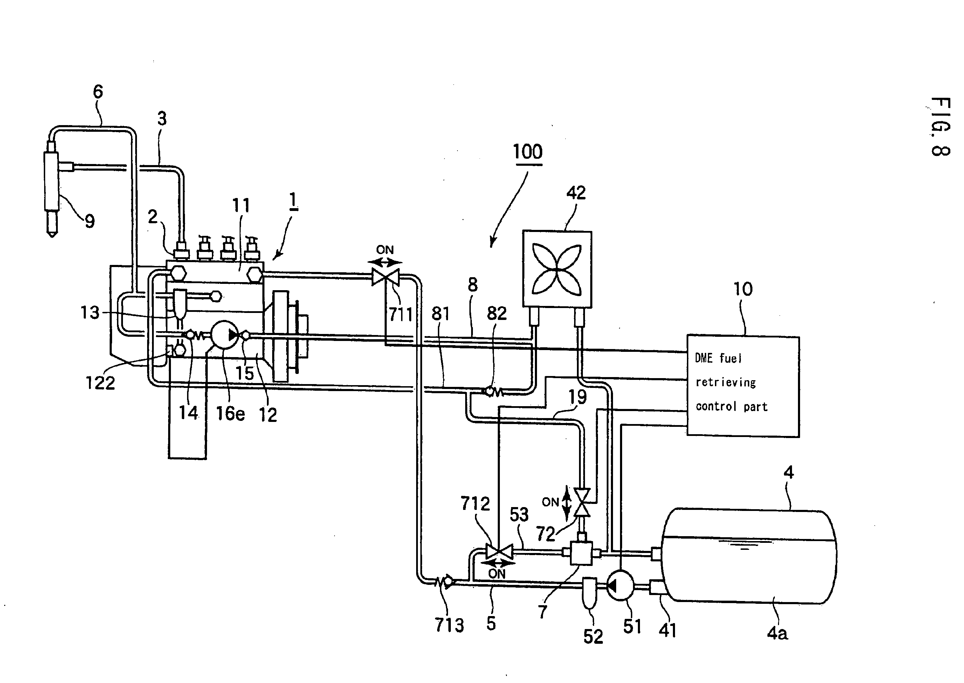

Fig. 8 is a schematic constitutional view showing a fourth embodiment of the DME fuel supply device 100 which constitutes "the fuel supply device of a diesel engine" according to the invention. Here, parts having identical constitutions as the parts of the DME fuel supply device 100 described in the first embodiment are given same symbols and their explanation is omitted.

In the DME fuel supply device 100 in the embodiment, the pressure switch 122 is arranged in the inside of the cam chamber 12. The pressure switch 122 which constitutes "a cam chamber pressure detection means" and "a cam chamber pressure regulating means" detects the pressure in the inside of the cam chamber 12 and, at the same time, assumes, an OFF state when the detected pressure is equal to or less than a predetermined pressure (a cam chamber control pressure Pe1) and assumes an ON state when the detected pressure exceeds the predetermined pressure.

The electrically-operated compressor 16e can, in the same manner as the DME fuel supply device 100 described in the above-mentioned first embodiment 1, reduce the pressure by suction in the inside of the cam chamber 12 of the injection pump 1 via an oil separator 13 irrespective of an operational state of the diesel engine. Then, the electrically-operated compressor 16e is subjected to an ON/OFF control in response to an ON/OFF state of the pressure switch 122.

Accordingly, when the pressure in the inside of the cam chamber 12 is a predetermined pressure (a cam chamber control pressure Pe1) or less, the electrically-operated compressor 16e is subjected to an OFF control, and at a point of time that the pressure in the inside of the cam chamber 12 exceeds the predetermined pressure (the cam chamber control pressure Pe1), the electrically-operated compressor 16e is subjected to an ON control such that the pressure in the inside of the cam chamber 12 is reduced to the predetermined pressure or less thus reducing the pressure in the inside of the cam chamber 12 by suction.

By reducing the pressure in the inside of the cam chamber 12 of the injection pump 1 by suction using the electrically-operated compressor 16e via an oil separator 13, the vaporization of the DME fuel leaked into the cam chamber 12 is accelerated, and the vaporized DME fuel in the inside of the cam chamber 12 is returned to a fuel tank 4 via a cooler 42 and hence, it is possible to prevent a fixed amount or more of the DME fuel from being stored in the inside of the cam chamber 12. That is, it is possible to reduce the pressure in the inside of the cam chamber 12 to the predetermined pressure (the cam chamber control pressure Pe1) or less at a point of time that the detected pressure of the cam chamber pressure sensor 121 exceeds the predetermined pressure (the cam chamber control pressure Pe1) irrespective of an operational state of the diesel engine and hence, it is always possible to prevent a fixed amount or more of DME fuel from being stored in the inside of the cam chamber 12.

### Embodiment 5

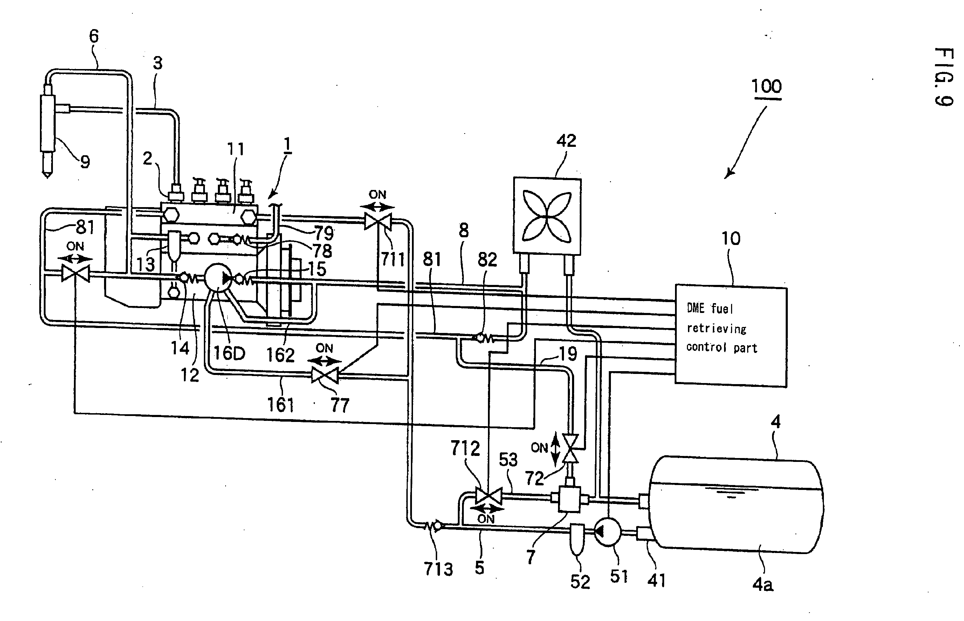

Fig. 9 is a schematic constitutional view showing a fifth embodiment of the DME fuel supply device which constitutes "the liquefied gas fuel supply device of a diesel engine" according to the invention. Here, parts having identical constitutions as the parts of the DME fuel supply device 100 described in the first embodiment are given same symbols and their explanation is omitted.

A DME fuel which is overflown from respective fuel injection nozzles 9 is returned to a fuel tank 4 by a hydraulic driving compressor 16D described later via an overflow return pipe 8 and a cooler 42 through the nozzle return pipe 6. By sucking the nozzle return pipe 6 using the hydraulic driving compressor 16D, the pressure in the nozzle return pipe 6 is restricted to an approximately fixed negative-pressure state. Accordingly, it is possible to reduce the lowering of fuel injection characteristic of the fuel injection nozzle 9 attributed to the fluctuation of an overflow side pressure of the fuel injection nozzle 9 which acts in the valve closing direction with respect to a valve of the fuel injection nozzle 9.

Further, by sucking the DME fuel overflown from the fuel injection nozzle 9 using the hydraulic driving compressor 16D, the DME fuel overflown from the fuel injection nozzle 9 is vaporized and the fuel injection nozzle 9 is cooled by heat of evaporation. Accordingly, the temperature elevation of the fuel injection nozzle 9 is suppressed and hence, it is also possible to decrease a possibility that the fuel injection characteristic of the fuel injection nozzle 9 is lowered attributed to the temperature elevation of the fuel injection nozzle 9.

The DME fuel in a gaseous state from which a lubricant is separated by an oil separator 13 is fed to the hydraulic driving compressor 16D via a check valve 14 which prevents the pressure in the inside of the cam chamber 12 from becoming an atmospheric pressure or less, and is returned to the fuel tank 4 via a check valve 15 and a cooler 42 after being pressurized by the hydraulic driving compressor 16D.

Further, in the injection pump 1, an atmosphere discharge pipe 79 which discharges the DME fuel leaked in the inside of the cam chamber 12 to the atmosphere, and a check valve 78 which holds the pressure in the inside of the cam chamber 12 at a fixed pressure (a cam chamber allowable pressure Pe0) or less are arranged on the atmosphere discharge pipe 79. When the hydraulic driving compressor 16D causes a malfunction and the pressure in the inside of the cam chamber 12 is elevated to the cam chamber control pressure Pe1 or more by a chance, the DME fuel leaked in the inside of the cam chamber 12 is discharged to the atmosphere in a state that the pressure in the inside of the cam chamber 12 of the injection pump 1 is held at a fixed pressure (a cam chamber allowable pressure Pe0) or less and hence, it is possible to prevent the DME fuel leaked in the inside of the cam chamber 12 from being mixed into a lubricant oil in the inside of the cam chamber 12.

The hydraulic driving compressor 16D is a compressor which is arranged on "a branch flow passage" in which the DME fuel fed from a delivery pump 51 is branched from a delivery pipe 5 and returns to the fuel tank 4 via a liquid-pressure supply pipe 161, a liquid-pressure return pipe 162, an overflow return pipe 8 and a cooler 42, and is operated by a liquid pressure of the DME fuel which circulates in the "branch flow passage". On the liquid-pressure supply pipe 161, a liquid-pressure open/close solenoid valve 77 which constitutes "a branch flow passage open/close valve" which is capable of opening and closing the "branch flow passage" is arranged.

It may be possible to set a delivery force under pressure of the hydraulic driving compressor 16D to a fixed value without providing the liquid-pressure open/close solenoid valve 77 by setting a ratio between a flow passage area of the delivery pipe 5 and a flow passage area of the liquid-pressure supply pipe 161 such that the liquid pressure of the DME fuel to the hydraulic driving compressor 16D assumes a proper liquid pressure.

A DME fuel retrieving control part 10 operates the hydraulic driving compressor 16D by operating the delivery pump 51 in a state that the liquid-pressure open/close solenoid valve 77 is opened during the operation of the diesel engine. Due to such a control, as mentioned previously, the DME fuel leaked into the cam chamber 12 and the DME fuel overflown to the nozzle return pipe 6 from the fuel injection nozzle 9 are sucked by the hydraulic driving compressor 16D and are fed to the fuel tank 4.

Further, by realizing the retrieving of the DME fuel remaining in the fuel gallery 11, the overflow fuel pipe 81 and the injection pipe 3 after stopping the diesel engine and the retrieving of the DME fuel leaked into the cam chamber 12 during the operation of the diesel engine using one hydraulic driving compressor 16D, it is possible to realize the miniaturization and a large reduction of cost of the DME fuel supply device 100.

Further, with the provision of the hydraulic driving compressor 16D which is operated with the liquid pressure of the DME fuel delivered from the delivery pump 51, it is possible to make use of a driving force of the delivery pump 51 which is originally employed for delivering the DME fuel to the injection pump 1 from the fuel tank 4 as the driving force for sucking the DME fuel remaining in the fuel gallery 11, the overflow fuel pipe 81 and the injection pipe 3 and for delivering the DME fuel to the fuel tank 4 after stopping the diesel engine. Accordingly, it is possible to have an advantageous effect that the further miniaturization and reduction of cost of the DME fuel supply device 100 can be realized.

### Embodiment 6

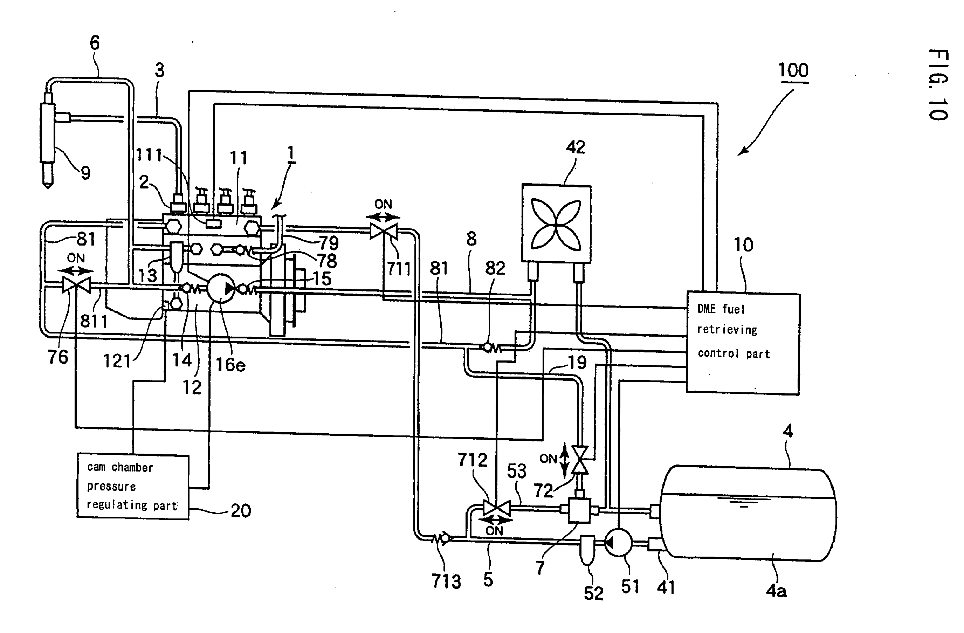

Fig. 10 is a schematic constitutional view showing a sixth embodiment of the DME fuel supply device which constitutes "the liquefied gas fuel supply device of a diesel engine" according to the invention. Here, parts having identical constitutions as the parts of the DME fuel supply device described in the first embodiment are given same symbols and their explanation is omitted.
A DME fuel which is overflown from respective fuel injection nozzles 9 is returned to a fuel tank 4 by an electrically-operated compressor 16e described later via an overflow return pipe 8 and a cooler 42 through the nozzle return pipe 6. The DME fuel in a gaseous state from which a lubricant is separated by an oil separator 13 is fed to the electrically-operated compressor 16e via a check valve 14 which prevents the pressure in the inside of the cam chamber 12 from becoming an atmospheric pressure or less, and is returned to the fuel tank 4 via a check valve 15 and a cooler 42 after being pressurized by the electrically-operated compressor 16e.

In the injection pump 1, an atmosphere discharge pipe 79 which discharges the DME fuel leaked in the inside of the cam chamber 12 to the atmosphere, and a check valve 78 which holds the pressure in the inside of the cam chamber 12 at a fixed pressure (a cam chamber allowable pressure Pe0) or less are arranged on the atmosphere discharge pipe 79. When the electrically-operated compressor 16e cause a malfunction and the pressure in the inside of the cam chamber 12 is elevated to the cam chamber control pressure Pe1 or more by a chance, the DME fuel leaked in the inside of the cam chamber 12 is discharged to the atmosphere in a state that the pressure in the inside of the cam chamber 12 of the injection pump 1 is held at a fixed pressure (a cam chamber allowable pressure Pe0) or less and hence, it is possible to prevent the DME fuel leaked in the inside of the cam chamber 12 from being mixed into a lubricant oil in the inside of the cam chamber 12.

"A residual fuel retrieving means" includes a suction pipe 811 which constitutes a suction passage and allows an overflow fuel pipe 81 and the electrically-operated compressor 16e to be communicated with each other, sucks the DME fuel remaining in a fuel gallery 11, an overflow fuel pipe 81 and an injection pipe 3 using the electrically-operated compressor 16e, and delivers the DME fuel to the fuel tank 4, and a suction pipe open/close solenoid valve 76 which constitutes "a suction passage open/close valve" which opens and closes the suction pipe 811. In the fuel gallery 11, a fuel gallery pressure sensor 111 which detects a pressure in the fuel gallery 11 is arranged.

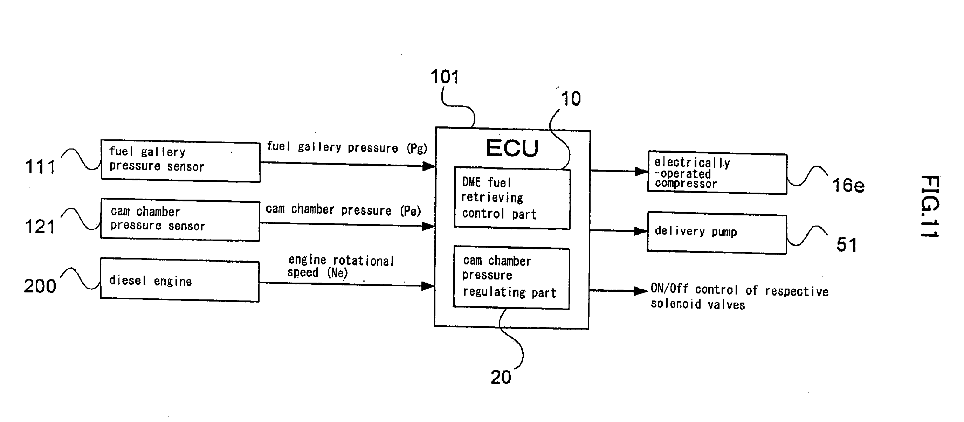

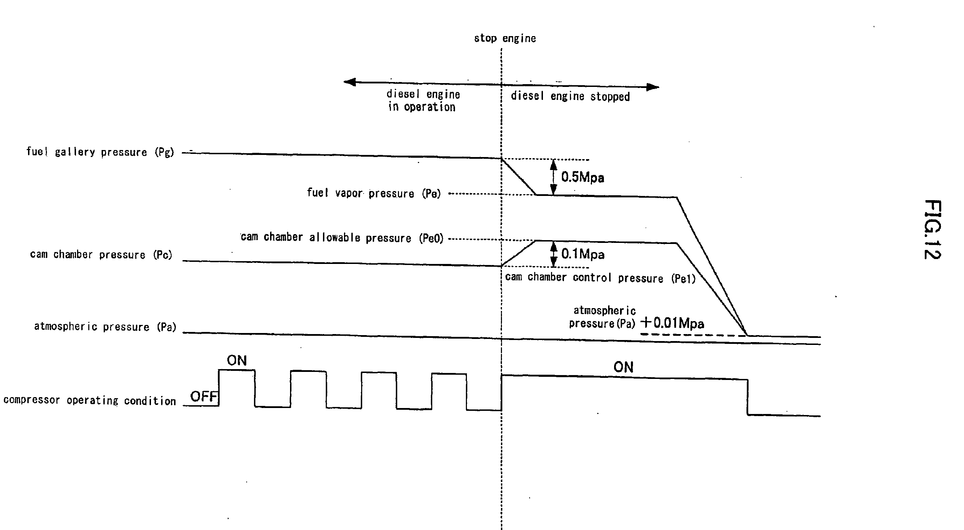

Fig. 11 is a block diagram of the DME fuel supply device 100. Fig. 12 is a timing chart showing pressures in the fuel gallery 11 and the cam chamber 12 in response to a control of the electrically-operated compressor 16e.

To an ECU 101 which constitutes a control means including a DME fuel retrieving control part 10 and a cam chamber pressure regulating part 20, a fuel gallery pressure Pg which the fuel gallery pressure sensor 111 outputs, a cam chamber pressure Pc which a cam chamber pressure sensor 121 outputs and an engine rotational speed Ne of the diesel engine 200 are inputted. The ECU 101 determines an operational state of the diesel engine 200 based on the engine rotational speed Ne of the diesel engine 200, and executes an ON/OFF control of the electrically-operated compressor 16e and the delivery pump 51 and the respective solenoid valves and the like based on the operational state, the fuel gallery pressure Pg, and the cam chamber pressure Pc and other state information.

During the operation of the diesel engine 200, a pressure in the fuel gallery 11 of the injection pump 1 (a fuel gallery pressure Pg) is held at an approximately fixed high pressure (a pressure higher than a fuel vapor pressure Pe by 0.5Mpa) due to the supply of the DME fuel under pressure from the fuel tank 4 by the delivery pump 51. During this period, the DME fuel retrieving control part 10 holds a state in which a suction pipe open/close solenoid valve 76 is closed thus preventing the DME fuel from being sucked into the fuel gallery 11 and the overflow fuel pipe 81 by the electrically-operated compressor 16e during the operation of the diesel engine.

Further, the cam chamber pressure regulating part 20 performs an ON/OFF control of the electrically-operated compressor 16e so as to hold the pressure in the inside of the cam chamber 12 (the cam chamber pressure Pc) which tends to be elevated due to a vapor pressure of the DME fuel leaked into the cam chamber 12 from the fuel gallery 11 at a predetermined pressure (a cam chamber control pressure Pe1).

During a period in which the electrically-operated compressor 16e is subjected to the ON control, the pressure in the inside of the cam chamber 12 is reduced by suction via the oil separator 13 thus lowering the cam chamber pressure Pc and hence, the DME fuel which is leaked into the cam chamber 12 and is vaporized is returned to the fuel tank 4. On the other hand, during a period in which the electrically-operated compressor 16e is subjected to the OFF control, the cam chamber pressure Pc is elevated due to the vapor pressure of the DME fuel leaked into the cam chamber 12 from the fuel gallery 11.

Accordingly, by performing the ON/OFF control of the electrically-operated compressor 16e based on the cam chamber pressure Pc detected by the cam chamber pressure sensor 121, it is possible to hold the cam chamber pressure Pc at the cam chamber control pressure Pe1.

When the diesel engine 200 which undergoes the operation is stopped, the supply of the pressurized fuel to the fuel gallery 11 by the delivery pump 51 is stopped, and an operation to recover the DME fuel which remains in the fuel gallery 11, the injection pipe 3 and the overflow fuel pipe 81 into the fuel tank 4 is started by "the residual fuel retrieving means" which is controlled by the DME fuel retrieving control part 10. The DME fuel retrieving control part 10, first of all, stops the delivery pump 51 and, at the same time, closes the delivery pipe open/close solenoid valve 711 by an OFF control.
Accordingly, the delivery of the DME fuel to the injection pump 1 from the fuel tank 4 by the delivery pump 51 is stopped and, at the same time, a state in which a flow passage of the DME fuel between the fuel tank 4 and the injection pump 1 is interrupted is established.

Subsequently, in a state that the overflow fuel pipe 81 and the electrically-operated compressor 16e are communicated with each other via the suction pipe 811 in response to an open/control (ON control) of the suction pipe open/close solenoid valve 76, the electrically-operated compressor 16e is operated. The pressure in the fuel gallery 11 is reduced by suction using the electrically-operated compressor 16e and hence, the DME fuel remaining in the fuel gallery 11 in a liquid state is gradually vaporized and is retrieved into the fuel tank 4.

The fuel gallery pressure Pg continuously holds a state in which the fuel gallery pressure Pg is lowered to an approximately fuel vapor pressure Pe during a period in which the DME fuel in a liquid state remains in the fuel gallery 11. Since the fuel leaked into the cam chamber 12 from the fuel gallery 11 is increased during such a period, the cam chamber pressure Pc tends to be further elevated. Accordingly, the cam chamber pressure regulating part 20 continues the operation of the electrically-operated compressor 16e while holding the electrically-operated compressor 16e in an ON control state to prevent the cam chamber pressure Pc from exceeding the cam chamber allowable pressure PeO (the cam chamber control pressure Pe1+0.1Mpa).

The DME fuel can be present only in a gaseous form in the fuel gallery 11 when the pressure in the fuel gallery 11 is equal to or less the fuel vapor pressure Pe and hence, when most of the DME fuel in a liquid state which remains in the fuel gallery 11, the overflow fuel pipe 81 and the injection pipe 3 is retrieved into the fuel tank 4, the fuel gallery pressure Pg starts the gradual lowering thereof. Further, along with the lowering of the fuel gallery pressure Pg, the DME fuel leaked into the cam chamber 12 from the fuel gallery 11 is reduced and hence, the cam chamber pressure Pc is also lowered by continuing an ON control of the electrically-operated compressor 16e as it is.

Then, at a point of time that the fuel gallery pressure Pg is lowered to the vicinity of the atmospheric pressure (the atmospheric pressure Pa + 0.01Mpa) and the cam chamber pressure Pc is lowered to the vicinity of the atmospheric pressure, the electrically operated compressor 16e is stopped by an OFF control. Then, after executing the above-mentioned residual fuel retrieving by making use of a suction force of an aspirator 7 and a gaseous phase pressure of the fuel tank 4, a delivery pump 51 is stopped by closing a fuel circulation pipe open/close solenoid valve 712 while holding the closing of a delivery pipe open/close solenoid valve 711 thus stopping the DME fuel supply device 100, the DME fuel is held between the delivery pipe open/close solenoid valve 711 and a check valve 713 in a filled state.

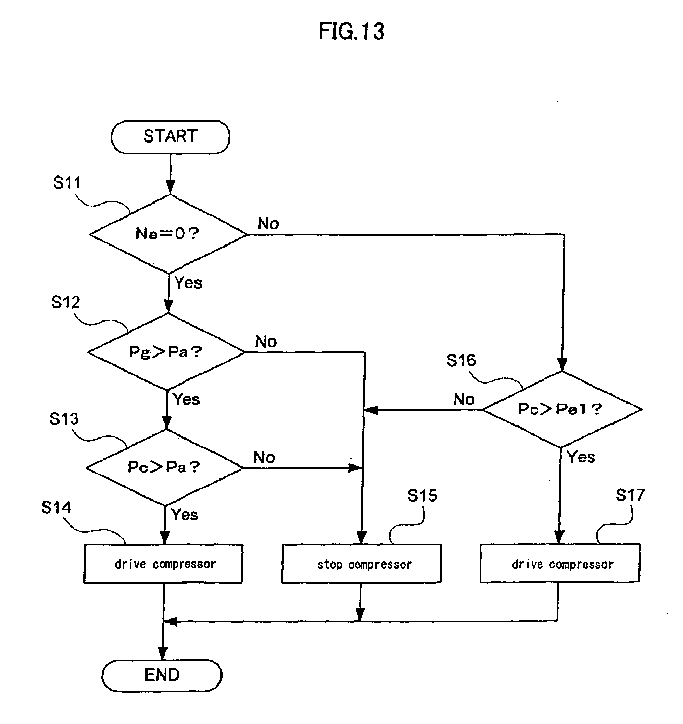

Fig. 13 is a flow chart showing control steps of the electrically-operated compressor 16e.
First of all, it is determined whether the engine rotational speed Ne is 0 or not thus determining whether the diesel engine 200 is operated or stopped (step S11). When the engine rotational speed Ne is not 0 (No in step S11), that is, when the diesel engine 200 is operated, subsequently, it is determined whether the cam chamber pressure Pc exceeds the cam chamber control pressure Pe0 or not (step S16).

When the cam chamber pressure Pc exceeds the cam chamber control pressure Pe0 (Yes in step S16), the electrically-operated compressor 16e is operated by an ON control and hence, the pressure in the inside of the cam chamber 12 is reduced by suction using the electrically-operated compressor 16e (step S17), while when the cam chamber pressure Pc does not exceed the cam chamber control pressure Pe0 (No in step S16), the electrically-operated compressor 16e is stopped by an OFF control (step S 15).

On the other hand, when the engine rotational speed Ne is 0 (Yes in step S11), that is, when the diesel engine 200 is stopped, subsequently, it is determined whether the fuel gallery pressure Pg exceeds the atmospheric pressure Pa or not (step S12). When the fuel gallery pressure Pg is not lowered to the atmospheric pressure Pa (atmospheric pressure Pa + 0.01Mpa) (Yes in step S12), subsequently, it is determined whether the cam chamber pressure Pc exceeds the atmospheric pressure Pa or not (step S13).

When the cam chamber pressure Pc is not lowered to the atmospheric pressure Pa (atmospheric pressure Pa + 0.01mpa) (Yes in step S13), the electrically-operated compressor 16e is operated by an ON control so as to reduce the pressure in the inside of the cam chamber 12 by suction using the electrically-operated compressor 16e(step S14).

Then, when the cam chamber pressure Pc is lowered to the atmospheric pressure Pa (atmospheric pressure Pa + 0.01Mpa) (No in step S13), the electrically-operated compressor 16e is stopped by an OFF control (step S15). Further, even when the fuel gallery pressure Pg is lowered to atmospheric pressure Pa (atmospheric pressure Pa + 0.01Mpa) (No in step S12), it is determined that the DME fuel remaining in the fuel gallery 11 is approximately retrieved and, in this case, it is determined that the cam chamber pressure Pc is also lowered to the atmospheric pressure Pa (atmospheric pressure Pa + 0.01Mpa) whereby the electrically-operated compressor 16e is stopped by an OFF control (step S15).

In this manner, in the diesel engine system which uses the DME fuel as "the liquefied gas fuel", even when the stopping and the operation of the diesel engine are frequently repeated without returning the DME fuel in the fuel gallery 11 of the injection pump 1 into the fuel tank 4, it is possible to prevent the DME fuel from being stored in the inside of the cam chamber 12.

Here, it is needless to say that the invention is not limited to the above-mentioned embodiments and the invention is applicable to a high pressure pump in a common rail system in which a cam chamber and a fuel gallery are partitioned from each other, for example, or various modifications within a scope of claims and these fall within the scope of the invention.

### Brief Description of the Drawings

[Fig. 1] Fig. 1 is a schematic constitutional view showing a first embodiment of a DME fuel supply device according to the invention;
[Fig. 2] Fig. 2 is a perspective view of an essential part showing a vicinity of an injection pump element;
[Fig. 3] Fig. 3 is a schematic a schematic constitutional view showing a second embodiment of a DME fuel supply device according to the invention;
[Fig. 4] Fig. 4 is a schematic constitutional view showing a third embodiment of a DME fuel supply device according to the invention;
[Fig. 5] Fig. 5 is a block diagram of the DME fuel supply device;
[Fig. 6] Fig. 6 is a timing chart showing pressure changes with respect to the control of a cam chamber pressure regulating valve;
[Fig. 7] Fig. 7 is a flow chart showing control steps of the cam chamber pressure regulating valve;
[Fig. 8] Fig. 8 is a schematic constitutional view showing a fourth embodiment of a DME fuel supply device according to the invention;
[Fig. 9] Fig. 9 is a schematic constitutional view showing a fifth embodiment of a DME fuel supply device according to the invention;
[Fig. 10] Fig. 10 is a schematic constitutional view showing a sixth embodiment of a DME fuel supply device according to the invention;
[Fig. 11] Fig. 11 is a block diagram showing the DME fuel supply device;
[Fig. 12] Fig. 12 is a timing chart showing pressures changed in accordance with a control of the electrically-operated compressor; and
[Fig. 13] Fig. 13 is a flow chart showing control steps of the electrically-operated compressor.

## Claims

1. A liquefied gas fuel supply device of a diesel engine comprising:
a fuel pressurizing device having a fuel gallery into which liquefied gas fuel is supplied, a cam chamber which is partitioned from the fuel gallery, a cam mechanism which is arranged in the inside of the cam chamber and is driven by the rotation of the diesel engine, and a pump element which is arranged astride the fuel gallery and the cam chamber and is driven by the cam mechanism to deliver under pressure the liquefied gas fuel in the fuel gallery into a fuel injection nozzle of the diesel engine;
a separation means which separates the liquefied gas fuel mixed into lubricant in the inside of the cam chamber from the lubricant;
a cam chamber pressure regulating means which reduces a pressure in the inside of the cam chamber of the fuel pressurizing device by suction by way of the separation means irrespective of an operational state of the diesel engine;
a cam chamber pressure detection means which detects a pressure in the inside of the cam chamber; and
a cam chamber pressure regulating means which controls the cam chamber pressure regulating means such that a pressure in the inside of the cam chamber is reduced to a predetermined pressure or less when a detected pressure of the cam chamber pressure detection means exceeds a predetermined pressure.

2. A liquefied gas fuel supply device of a diesel engine according to claim 1, wherein the inside of the cam chamber pressure regulating means includes an electrically-operated compressor which is capable of reducing the pressure in the inside of the cam chamber by suction and is configured to be capable of regulating the pressure in the inside of the cam chamber by controlling the electrically-operated compressor.

3. A liquefied gas fuel supply device of a diesel engine according to claim 1, wherein the inside of the cam chamber pressure regulating means includes a pressure reducing tank, a means which reduces the pressure in the inside of the pressure reducing tank to a predetermined pressure or less and holds the reduced pressure, and a cam chamber pressure regulating valve which is capable of opening or closing the communication between the pressure reducing tank and the cam chamber, wherein the pressure in the inside of the cam chamber is regulatable by performing an open/close control of the cam chamber pressure regulating valve.

4. A liquefied gas fuel supply device of a diesel engine according to claim 3, wherein the liquefied gas fuel supply device includes a cam driving compressor which uses the cam mechanism in the inside of the cam chamber as a driving power source and delivers under pressure the liquefied gas fuel which is separated by the separation means to the fuel tank, wherein the pressure reducing tank is connected to a suction port of the cam driving compressor by way of a check valve and hence, the pressure in the inside of the cam chamber is reduced into a negative pressure by suction due to an operation of the cam driving compressor, and the pressure in the inside of the cam chamber is regulatable by an open/close control of the cam chamber pressure regulating valve in a negative pressure state.

5. A liquefied gas fuel supply device of a diesel engine according to claim 2, wherein the inside of the cam chamber pressure regulating means includes a pressure switch which uses the pressure of the cam chamber as the driving power source.

6. A liquefied gas fuel supply device of a diesel engine comprising:
a fuel pressurizing device which delivers under pressure the liquefied gas fuel which is fed from a fuel tank to a fuel injection nozzle of a diesel engine, an overflow fuel flow passage which returns the liquefied gas fuel overflown from a fuel gallery of the fuel pressurizing device to the fuel tank, a residual fuel retrieving means which sucks the liquefied gas fuel remaining in the fuel gallery and the overflow fuel flow passage by a compressor and delivers the sucked liquefied gas fuel to the fuel tank after stopping the diesel engine, and a cam chamber suction means which sucks the liquefied gas fuel leaked into a cam chamber of the fuel pressurizing device by the compressor, wherein
the compressor is a hydraulic driving compressor which is arranged on a branch flow passage for liquefied gas fuel which is branched from a delivery passage for liquefied gas fuel to the fuel pressurizing device from a fuel delivery means which delivers the liquefied gas fuel to the fuel pressurizing device from the fuel tank to the fuel pressurizing device and returns to the fuel tank, and is operated in response to a liquid pressure of the liquefied gas fuel which flows into a branch flow passage,
the residual fuel retrieving means includes a suction passage open/close valve which opens or closes a suction passage from the fuel gallery and the overflow fuel flow passage to the hydraulic driving compressor, a branch flow passage open/close valve which is capable of opening or closing the branch flow passage, and a residual fuel retrieving control device which controls an operation of the hydraulic driving compressor in a state that the suction passage open/close valve is closed during the operation of the diesel engine and controls the operation of the hydraulic driving compressor in a state that the suction passage open/close valve is opened after stopping the operation of the diesel engine, and the residual fuel retrieving control device controls the operation of the hydraulic driving compressor by performing an open/close control of the branch flow passage open/close valve.
